# FASCICULE DE BREVET EUROPEEN

(11) **EP 2 089 476 B1**
(45) Date de publication et mention de la délivrance du brevet: **11.01.2017**
(21) Numéro de dépôt: 07822210.6
(22) Date de dépôt: 05.11.2007
(51) Int. Cl.: C08L 77/02, C08L 77/06, C08K 5/3492, C08L 61/06

(54) **COMPOSITION DE POLYAMIDE IGNIFUGEE**
FLAMMFESTE POLYAMIDZUSAMMENSETZUNG
FIREPROOF POLYAMIDE COMPOSITION

(30) Priorité: 10.11.2006 FR 0609827
(43) Date de publication de la demande: 19.08.2009
(73) Titulaire: Rhodia Opérations, 93306 Aubervilliers (FR)
(72) Inventeur: COUILLENS, Xavier, 31170 Tournefeuille (FR); AMORESE, Michelangelo, 20155 Milano (IT); VERGELATI, Caroll, 38118 Saint Baudille De La Tour (FR)
(74) Mandataire: Benvenuti, Federica
(86) Numéro de dépôt international: PCT/EP2007/061881
(87) Numéro de publication internationale: WO 2008/055872

(56) Documents cités:
- FR-A1- 2 794 467

## Description

La présente invention concerne une composition polyamide ignifugée notamment utilisable pour la fabrication d'articles moulés. L'invention propose une composition à base de polyamide comprenant du cyanurate de mélamine et une résine novolaque. La composition est notamment utile pour la réalisation d'articles moulés employés dans le domaine de la connectique électrique ou électronique tels que éléments de disjoncteurs, interrupteurs, connecteurs.

La présente invention concerne une composition polyamide ignifugée notamment utilisable pour la fabrication d'articles moulés, particulièrement une composition polyamide ignifugée par un système ignifugeant sans halogène ni phosphore.

Les compositions à base de résine polyamide sont utilisées pour la réalisation d'articles par différents procédés de mise en forme désignés par le terme générique "moulage". Ces articles sont utilisés dans de nombreux domaines techniques. Parmi ceux-ci la réalisation de pièces de systèmes électriques ou électroniques est une application importante requérant des propriétés particulières. Ainsi, ces pièces doivent présenter des propriétés mécaniques élevées mais également des propriétés de résistance chimique, d'isolation électrique et surtout une résistance au feu élevée. Ces pièces doivent maintenir de plus une stabilité dimensionnelle satisfaisante après reprise d'humidité permettant leur fonctionnement ainsi qu'une préservation de leurs propriétés d'usage dans des pays chauds et humides.

L'ignifugation des compositions à base de résine polyamide a été étudiée depuis très longtemps. Ainsi, les ignifugeants principaux utilisés sont le phosphore rouge et, des composés halogénés tels que le dibromophénol, les polybromodiphényles, les polybromodiphénoxydes, et les polystyrènes bromés. Depuis une vingtaine d'années, une nouvelle classe d'ignifugation a été trouvée, à savoir, des composés organiques azotés appartenant à la classe des triazines telles que la mélamine ou ses dérivés comme le cyanurate de mélamine et plus récemment les phosphates, polyphosphates et pyrophosphates de mélamine.

L'avantage de cette dernière classe d'ignifugeants réside dans le fait que les composés concernés ne contiennent pas d'halogènes ni de phosphore. En effet, les ignifugeants contenant des halogènes ou du phosphore rouge peuvent générer des gaz ou vapeurs toxiques lors de la combustion de la composition polyamide, ou même durant l'élaboration de ladite composition. Toutefois, les quantités de certains composés à base de mélamine nécessaires pour obtenir une ignifugation satisfaisante sont très élevées, notamment pour les compositions contenant des charges de renfort sous forme de fibres telles que les fibres de verre, les charges minérales ou les fibres organiques themostables. Le coût de ces compositions dû aux fortes quantités de certains composés à base de mélamine, notamment les polyphosphates de mélamine rend leur commercialisation peu intéressante. De plus cette concentration élevée en composés de mélamine présente certains inconvénients notamment pendant la fabrication de la composition, tels que la production de vapeur des composés mélaminés, ou pendant la production des articles moulés, tels que l'obstruction des conduits de ventilation et des dépôts dans les moules.

II existe ainsi un besoin de préparer des compositions polyamides ignifugées à base de composés de mélamine avec une teneur en composé de mélamine relativement faible.

Par ailleurs, la résine novolaque est connue pour diminuer la reprise en eau des compositions polyamides et ainsi augmenter la stabilité dimensionnelle des pièces résultantes. Toutefois, une quantité relativement importante en résine novolaque conduit à une diminution significative des propriétés mécaniques. Il existe ainsi un besoin de préparer des compositions polyamides permettant de fabriquer des pièces moulées ayant une bonne stabilité dimensionnelle avec une teneur en résine novolaque relativement faible.

Le document FR2794467 décrit une composition polyamide ignifugée notamment utilisable pour la fabrication d'articles moulés, comprenant un système d'ignifugation contenant un dérivé de mélamine et une résine novolaque.

Au surplus, il apparaît que la résine novolaque conduit à une diminution des propriétés d'ignifugation de compositions polyamides comprenant des composés ignifugeants. Ceci est notamment observé dans les exemples de la partie expérimentale ci-dessous.

Il existe ainsi un besoin de préparer une composition polyamide ignifugée ayant une faible reprise en eau et permettant la réalisation de pièces ayant une bonne stabilité dimensionnelle tout en évitant les inconvénients mentionnés précédemment.

La demanderesse a maintenant trouvé de manière tout à fait surprenante qu'une composition polyamide comprenant une faible teneur en résine novolaque et une teneur relativement faible en cyanurate de mélamine, un dérivé de la mélamine, permettait d'obtenir des résultats optimaux en matière d'ignifugation et de reprise en eau. Contrairement à ce qui était connu jusque là, la résine novolaque n'altère pas les propriétés d'ignifugation de la composition polyamide comprenant un dérivé de la mélamine.

La demanderesse a de plus trouvé de manière tout a fait surprenante que dans la composition polyamide la résine novolaque et le cyanurate de mélamine agissent en synergie alors même que ces deux composés agissent habituellement de manière différentes en tant qu'agent ignifugeant. En effet, la résine novolaque est connue pour être un agent participant à la formation d'une couche de carbone (char) isolant la matrice polyamide de la flamme. A contrario, le cyanurate de mélamine est connu pour agir sur la scission contrôlée des chaînes du polyamide provoquant la formation de gouttes de polyamide fondu (dripping) empêchant ainsi la propagation de la combustion.

La présente invention concerne ainsi l'utilisation dans une matrice polyamide d'une combinaison de cyanurate de mélamine et de résine novolaque en tant que, ou en rapport avec, un agent ignifugeant.

La présente invention a pour objet une composition à base de polyamide comprenant au moins :
- de 0,1 à 15 % en poids de cyanurate de mélamine ; et
- de 0,1 à 4 % en poids de résine novolaque ; par rapport au poids total de la composition.
Le polyamide est choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12.

La composition de l'invention peut également comprendre les copolyamides dérivés notamment des polyamides ci-dessus, ou les mélanges de ces polyamides ou copolyamides.
Les polyamides préférés sont le polyhexaméthylène adipamide, le polycaprolactame, ou les copolymères et mélanges entre le polyhexaméthylène adipamide et le polycaprolactame.
On utilise généralement des polyamides de poids moléculaires adaptés aux procédés de moulage par injection, bien que l'on puisse utiliser aussi des polyamides de plus faibles viscosités.
La matrice polyamide peut notamment être un polymère comprenant des chaînes macromoléculaires étoiles ou H, et le cas échéant des chaînes macromoléculaires linéaires. Les polymères comprenant de telles chaînes macromoléculaires étoiles ou H sont par exemple décrits dans les documents FR 2743077, FR 2779730, US 5959069, EP 0632703, EP 0682057 et EP 0832149. Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO 99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention peut comprendre entre 20 et 80 % en poids, préférentiellement entre 50 et 70 % en poids, de polyamide, par rapport au poids total de la composition.

La composition selon l'invention comprend également une résine novolaque. Les résines novolaque sont des composés polyhydroxy, par exemple des produits de condensation de composés phénoliques avec des aldéhydes. Ces réactions de condensation sont généralement catalysées par un acide.

Les composés phénoliques peuvent être choisis seuls ou en mélange parmi le phénol, le crésol, le xylénol, le naphtol, les alkylphénols, comme le butyl-phénol, le terbutyl-phénol ou l'isooctyl-phénol ; ou tout autre phénol substitué. L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, et le glycoxal.

Les résines utilisées ont avantageusement un poids moléculaire supérieur compris entre 500 et 3000 g/mol, de préférence entre 800 et 2000 g/mol.

Comme résine novolaque commerciale, on peut citer notamment les produits commerciaux Durez®, Vutkadur® ou Rhenosin®.

La composition selon l'invention comprend entre 0,1 à 4 % en poids de résine novolaque, notamment de 1 à 4 % en poids, particulièrement 1, 2, 3 ou 4 % en poids ou les proportions comprises entre ces valeurs, par rapport au poids total de la composition.

La composition de l'invention comprend de 0,1 à 15 % en poids de cyanurate de mélamine, préférentiellement de 5 à 12 % en poids, par rapport au poids total de la composition.
La composition peut aussi comprendre des charges de renfort notamment choisies dans le groupe comprenant des fibres de verre, et/ou charges minérales telles que le kaolin, le talc ou la wollastonite, ou encore des charges exfoliables. La concentration pondérale des charges de renfort est comprise avantageusement entre 1 % et 50 % en poids par rapport au poids total de la composition, de préférence entre 15 et 50 %. On peut notamment utiliser un mélange de fibres de verre et de charges minérales, telle que de la wollastonite.

Les compositions de l'invention peuvent également comprendre tous les additifs habituellement utilisés dans les compositions à base de polyamide utilisées pour la fabrication d'articles moulés. Ainsi, on peut citer à titre d'exemple d'additifs les stabilisants thermiques, les stabilisants U.V., les antioxydants, les lubrifiants, les pigments, colorants, plastifiants ou des agents modifiant la résistance aux chocs. A titre d'exemple, les antioxydants et stabilisants chaleur sont, par exemple, des halogénures d'alcalins, des halogénures de cuivre, les composés phénoliques stériquement encombrés, les amines aromatiques. Les stabilisants U.V. sont généralement des benzotriazoles, des benzophénones ou des HALS.

Les compositions peuvent de plus comprendre en combinaison d'autres composés connus pour leurs propriétés ignifugeantes, comme par exemple les composés à base de phosphore rouge, les hydroxydes d'alcalino-terreux comme l'hydroxyde de magnésium.

Il n'y a pas de limitation aux types d'agents modifiants la résistance aux chocs. Ce sont généralement des polymères d'élastomères qui peuvent être utilisés à cet effet. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 15 % par rapport au poids total de la composition.

La composition selon l'invention est tout préférentiellement constituée :
- de 20 à 80 % en poids de résine polyamide, notamment un polyamide 6, 66 leurs copolymères ou mélanges ;
- de 0,1 à 15 % en poids de cyanurate de mélamine ;
- de 0,1 à 4 % en poids de résine novolaque ;
- de 1 à 50 % en poids de charges de renforts ;
- éventuellement des additifs choisis dans le groupe comprenant les stabilisants thermiques, les stabilisants U.V., les antioxydants, les lubrifiants, les pigments, les colorants, les plastifiants ou les agents modifiant la résistance aux chocs ;
les pourcentages en poids sont exprimés par rapport au poids total de la composition.

Les compositions de l'invention sont obtenues par mélange des différents constituants généralement dans une extrudeuse mono ou bivis, à une température suffisante pour maintenir la résine polyamide en milieu fondu. Généralement, le mélange obtenu est extrudé sous forme de joncs qui sont coupés en morceaux pour former des granulés. Le cyanurate de mélamine et la résine novolaque peuvent être ajoutés ensemble ou séparément, au polyamide par mélange a chaud ou a froid.

L'addition des composés et des additifs peut être réalisée par ajout de ces composés dans le polyamide fondu sous forme pure ou sous forme de mélange concentré dans une résine telle que par exemple une résine polyamide.

Les granulés obtenus sont utilisés comme matière première pour alimenter les procédés de fabrication d'articles moulés tels que les procédés d'injection, d'extrusion, d'extrusion-soufflage.

Ainsi, la composition de l'invention convient particulièrement pour la fabrication d'articles utilisés dans le domaine de la connectique électrique ou électronique tels que éléments de disjoncteurs, interrupteurs, connecteurs ou analogues.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Différentes compositions ont été fabriquées par mélange de polyamide avec les différents composés. Le mélange est réalisé dans une extrudeuse double vis à une température de 260°C. Le mélange est extrudé sous forme de joncs pour former des granulés par coupe de ces joncs.

Les matériaux utilisés sont :
- Polyamide: polyhexaméthylène adipamide (PA 6.6) commercialisé sous le nom commercial "Technyl A 27 A 00" vendu par la société Rhodia
- Cyanurate de mélamine : MC 25 vendu par la société Ciba
- Résine Novolaque : Rhenosin® PR 95 vendu par la société RheinChemie
- Wollastonite : M15 vendu par la société Nyco
- Additifs de moulage : talc, colorants, stéarate d'aluminium
- Mélange d'ignifugation F : diéthyl phosphinate d'aluminium et polyphosphate de mélamine
- Fibres de verre : 99B (diamètre de 10 µm) vendu par la société Vetrotex

La concentration en pourcentage pondéral de chaque composé et les propriétés mécaniques et d'ignifugation de chaque composition sont indiquées dans le tableau ci-dessous :

| **Composition** | C1 | 1 | C2 | C3 | C4 |
|---|---|---|---|---|---|
| Polyamide | 67 | 64 | 61 | 56 | 51,4 |
| Cyanurate de Mélamine | 9 | 9 | 9 | 0 | 0 |
| Résine Novolaque | 0 | 3 | 8 | 0 | 4,6 |
| Wollastonite | 20 | 20 | 20 | 0 | 0 |
| Fibres de verres | 0 | 0 | 0 | 25 | 25 |
| Additif de moulage | 4 | 4 | 4 | 4 | 4 |
| F | 0 | 0 | 0 | 15 | 15 |

| **Propriétés** | | | | | |
|---|---|---|---|---|---|
| Energie de rupture (KJ/m², ISO179/1eU) | 43,9 | 35,0 | 33,7 | 59,7 | 57 |
| Contrainte à la rupture (N/mm², ISO 527) | 81 | 86 | 89 | 134 | 140 |
| Inflammabilité (UL 94 1/32") | V2 | V2 | V2 | V0 | V2 |
| Résistance au fil incandescent (IEC 60695-2-12 1,0 mm) | 960 | 960 | 850 | 960 | 850 |
| Reprise d'humidité * (%) | 100 | -20,2 | -41 | 100 | - |

| | | | | | |
|---|---|---|---|---|---|
| * la reprise d'humidité est mesurée en plaçant des pièces dans un conditionnement particulier composé de 3 cycles répétant : un conditionnement de 48 heures à 55°C avec une humidité relative de 95 %, suivi d'un conditionnement de 24 heures à 23°C avec une humidité relative de 50 % ; et ensuite comparé par rapport à la reprise d'humidité de l'échantillon référence C1 ou C3 (100%). | | | | | |

On observe ainsi qu'une composition polyamide comprenant du cyanurate de mélamine et une faible teneur en résine novolaque permet l'obtention d'un bon compromis de propriétés mécaniques, d'ignifugation et une faible reprise d'humidité.

## Revendications

1. Composition à base de polyamide comprenant au moins:
- de 0,1 à 15 % en poids de cyanurate de mélamine; et
- de 0,1 à 4 % en poids de résine novolaque; par rapport au poids total de la composition.

2. Composition selon la revendication 1, **caractérisée en ce qu'**elle comprend de 5 à 12 % en poids de cyanurate de mélamine, par rapport au poids total de la composition.

3. Composition selon l'une des revendications précédentes, **caractérisée en ce qu'**elle comprend une charge de renfort choisie dans le groupe comportant les fibres de verre et les charges minérales.

4. Composition selon la revendication 1 constituée:
- de 20 à 80 % en poids de résine polyamide;
- de 0,1 à 15 % en poids de cyanurate de mélamine;
- de 0,1 à 4 % en poids de résine novolaque;
- de 1 à 50 % en poids de charges de renforts;
- éventuellement des additifs choisis dans le groupe comprenant les stabilisants thermiques, les stabilisants U. V., les antioxydants, les lubrifiants, les pigments, les colorants, les plastifiants ou les agents modifiant la résistance aux chocs; les pourcentages en poids sont exprimés par rapport au poids total de la composition.

5. Article obtenu par moulage, mise en forme d'une composition selon l'une des revendications 1 à 4.

## Patentansprüche

1. Polyamidzusammensetzung, umfassend mindestens:
- 0,1 bis 15 Gewichts% Melamincyanurat und
- 0,1 bis 4 Gewichts% Novolakharz; bezogen auf das Gesamtgewicht der Zusammensetzung.

2. Zusammensetzung nach Anspruch 1, **dadurch gekennzeichnet, dass** sie 5 bis 12 Gewichts% Melamincyanurat, bezogen auf das Gesamtgewicht der Zusammensetzung, umfasst.

3. Zusammensetzung nach einem der vorhergehenden Ansprüche, **dadurch gekennzeichnet, dass** sie einen verstärkenden Füllstoff, der aus der Gruppe umfassend Glasfasern und anorganische Füllstoffe ausgewählt ist, umfasst.

4. Zusammensetzung nach Anspruch 1, bestehend aus:
- 20 bis 80 Gewichts% Polyamidharz;
- 0,1 bis 15 Gewichts% Melamincyanurat;
- 0,1 bis 4 Gewichts% Novolakharz;
- 1 bis 50 Gewichts% verstärkenden Füllstoffen,
- gegebenenfalls Additiven aus der Gruppe umfassend Wärmestabilisatoren, UV-Stabilisatoren, Antioxidantien, Schmiermittel, Pigmente, Farbmittel, Weichmacher oder Schlagzähigkeitsmodifikatoren; wobei die Gewichts% anteile bezogen auf das Gesamtgewicht der Zusammensetzung ausgedrückt sind.

5. Artikel, erhalten durch Abformen oder Umformen einer Zusammensetzung nach einem der Ansprüche 1 bis 4.

## Claims

1. Polyamide composition comprising at least:
- from 0.1% to 15% by weight of melamine cyanurate; and
- from 0.1% to 4% by weight of novolac resin; relative to the total weight of the composition.

2. Composition according to Claim 1, **characterized in that** it comprises from 5% to 12% by weight of melamine cyanurate, relative to the total weight of the composition.

3. Composition according to either of the preceding claims, **characterized in that** it comprises a reinforcing filler chosen from the group comprising glass fibers and mineral fillers.

4. Composition according to Claim 1 constituted of:
- 20% to 80% by weight of polyamide resin;
- 0.1% to 15% by weight of melamine cyanurate;
- 0.1% to 4% by weight of novolac resin;
- 1% to 50% by weight of reinforcing fillers;
- optionally additives chosen from the group comprising heat stabilizers, UV stabilizers, antioxidants, lubricants, pigments, colorants, plasticizers and impact strength modifiers; the weight percentages being expressed relative to the total weight of the composition.

5. Article obtained by molding or shaping a composition according to one of Claims 1 to 4.
